(19) Europäisches Patentamt
European Patent Office
Office européen des brevets

(11) EP 0 739 925 B1

# (12) EUROPÄISCHE PATENTSCHRIFT

(45) Veröffentlichungstag und Bekanntmachung des Hinweises auf die Patenterteilung:
**07.07.1999 Patentblatt 1999/27**

(51) Int Cl.[6]: **C08G 75/23**, C08G 65/00, C08G 81/00, A61L 29/00

(21) Anmeldenummer: **96105924.3**

(22) Anmeldetag: **16.04.1996**

(54) **Polysulfon/Polyether-Blockcopolykondensate**

Polysulfone-polyether block copolycondensates

Copolycondensats séquencés polysulfones-polyéthers

(84) Benannte Vertragsstaaten:
**BE DE DK ES FR GB IT NL SE**

(30) Priorität: **28.04.1995 DE 19515689**

(43) Veröffentlichungstag der Anmeldung:
**30.10.1996 Patentblatt 1996/44**

(73) Patentinhaber: **BAYER AG**
**51368 Leverkusen (DE)**

(72) Erfinder:
- **Pudleiner, Heinz, Dr.**
  **47800 Krefeld (DE)**
- **Dujardin, Ralf, Dr.**
  **47877 Willich (DE)**
- **Wehrmann, Rolf, Dr.**
  **47800 Krefeld (DE)**
- **Reuter, Knud, Dr.**
  **47800 Krefeld (DE)**
- **Meier, Helmut-Martin, Dr.**
  **40883 Ratingen (DE)**

(56) Entgegenhaltungen:
**EP-A- 0 331 492**
**EP-A- 0 569 263**
**US-A- 5 213 574**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 739 925 B1

## Beschreibung

Die Erfindung betrifft Polysulfon/Polyether-Blockcopolykondensate, ein Verfahren zu ihrer Herstellung, ihre Verwendung zur Herstellung von Formkörpern und die Formkörper selbst.

Aromatische Polysulfone und aromatische Polyetherketone und Polyetherthioketone sind bekannt (z.B. GB-PS 1 078 237, US-P 4 010 147 und EP-A 135 938). Sie können beispielsweise durch Umsetzung von Dialkalisalzen von Diphenolen mit Dihalogen-diarylsulfonen in einem polaren Lösungsmittel hergestellt werden.

Es hat sich jedoch als nachteilig erwiesen, daß diese Materialien hohe Schmelztemperaturen haben und daher nur schwer durch Extrusion zu verarbeiten sind. Darüber hinaus ist bei Materialien für Katheterschläuche erwünscht, daß sie flexibel sind und im Körper bei Blutkontakt durch Erwärmung und Weichmachung durch Feuchtigkeitsaufnahme erweichen. Die oben genannten Polymere erfüllen diese Anforderungen nicht.

Es wurde gefunden, daß die erfindungsgemäßen Polysulfon/Polyether-Blockcopolykondensate bei relativ geringen Temperaturen, z.B. im Bereich von 150 bis 200°C, gut verarbeitbar sind, ohne daß das Polymer während der Verarbeitung einen deutlichen Molekulargewichtsabbau erleidet. Sie sind daher durch Extrusion, Spritzgießen, Sintern, Verpressen oder Gießen aus einem geeigneten Lösungsmittel gut verarbeitbar zu Formkörpern und Folien. Die Polysulfon/Polyether-Blockcopolykondensate zeichnen sich durch gute Blutverträglichkeit aus. Gegenüber bekannten Mischungen von Polysulfonen und Polyethylenglykolen bieten sie weiterhin den Vorteil, daß die in das Polymer eingebaute Polyether-Einheiten z.B. beim Einsatz als Membran oder Katheterschlauch nicht ausgewaschen werden kann.

Gegenstand der Erfindung sind Polysulfon/Polyether-Blockcopolykondensate mit der wiederkehrenden Struktureinheit der Formel (I)

$$\{O\text{-}E\text{-}O\text{-}Ar^1\text{-}SO_2\text{-}Ar^2\}W\text{-} \qquad (I)$$

worin

| | |
|---|---|
| E | ein zweibindiger Diphenolat-Rest bedeutet, |
| $Ar^1$ und $Ar^2$ | gleiche oder verschiedene difunktionelle aromatische Reste mit 6 bis 50, vorzugsweise 6 bis 25, Kohlenstoffatomen bedeuten, und |
| W | für einen mindestens zwei, vorzugsweise zwei bis acht, besonders bevorzugt zwei bis vier, ganz besonders bevorzugt zwei bis drei, insbesondere zwei, Hydroxylgruppen aufweisenden Polyether, Polythioether oder Polyacetal mit einem mittleren Molekulargewicht ($\overline{M}_n$) von 400 bis 30.000, vorzugsweise 500 bis 20.000, steht,<br>wobei der Anteil des Restes W im Gesamt-Blockcopolykondensat 5 bis 99, vorzugsweise 10 bis 90, insbesondere 20 bis 70 Gew.-% (bezogen auf 100 Gew.-% Gesamt-Polymer) beträgt. |

In der obengenannten Formel (I) steht E vorzugsweise für einen Rest der Formel (II)

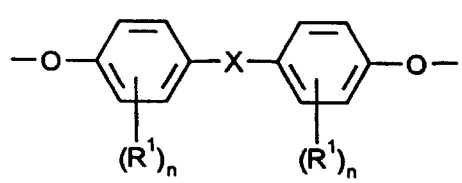

(II)

wobei

$R^1$ jeweils unabhängig voneinander, gleich oder verschieden für Wasserstoff, Halogen, $C_1$-$C_6$-Alkyl oder $C_1$-$C_6$-Alkoxy, vorzugsweise für Wasserstoff, Fluor, Chlor, Brom, Methyl, Ethyl, n- oder iso-Propyl, n-, iso- oder tert.-Butyl, Methoxy, Ethoxy, n- oder iso-Propoxy, n-, iso- oder tert.-Butoxy steht,

n für eine ganze Zahl 1 bis 4, vorzugsweise 1, 2 oder 3, insbesondere 1 oder 2 steht,

X für eine chemische Bindung, -CO-, -O-, -S-, $-SO_2-$, für Alkylen, vorzugsweise $C_1$-$C_8$-Alkylen, Alkyliden, vorzugsweise $C_2$-$C_{10}$-Alkyliden oder Cycloalkylen steht, wobei die 3 letztgenannten Reste durch Substituenten, ausgewählt aus Halogen, insbesondere Fluor, Chlor, Brom, gegebenenfalls durch Fluor, Chlor, Brom, $C_1$-$C_4$-Alkyl und/oder $C_1$-$C_4$-Alkoxy substituiertes Phenyl oder Naphthyl substituiert sein können und wobei Cycloalkylen, zusätzlich noch durch $C_1$-$C_6$-Alkyl, substituiert sein kann.

Im Falle, daß X für Cycloalkylen steht, steht X vorzugsweise für einen Rest der Formel (III)

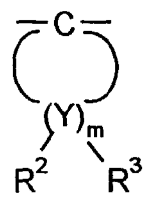

(III)

worin

Y für Kohlenstoff steht,

$R^2$ und $R^3$ für jedes Y individuell wählbar, unabhängig voneinander Wasserstoff oder $C_1$-$C_6$-Alkyl, besonders bevorzugt für Wasserstoff oder $C_1$-$C_4$-Alkyl, insbesondere Wasserstoff, Methyl oder Ethyl steht und

m für eine ganze Zahl von 3 bis 12, vorzugsweise 4 bis 8, insbesondere 4 oder 5, steht.

X steht weiterhin vorzugsweise für Alkylen mit der oben genannten Bedeutung,

$Ar^1$ und $Ar^2$ stehen unabhängig voneinander für jeweils gegebenenfalls durch Halogen, insbesondere Fluor, Chlor, Brom und/oder Nitro substituiertes Phenyl, oder den Rest

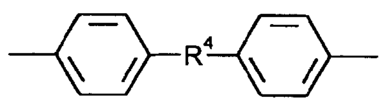 ,

wobei $R^4$ für $C_1$-$C_6$-Alkylen oder $C_1$-$C_6$-Alkyliden, insbesondere Methylen oder $-C(CH_3)_2-$, steht und die Phenylringe durch Halogen, insbesondere Fluor, Chlor, Brom substituiert sein können.

Gegenstand der Erfindung ist weiterhin ein Verfahren zur Herstellung der erfindungsgemäßen Polysulfon/Polyether-Blockcopolykondensaten durch Umsetzung von Dialkalidiphenolaten (in der Regel Di-Natriumdiphenolat) der Formel (IIa)

$$\text{Alkali-O-E-O-Alkali} \qquad \text{(IIa)}$$

worin E die obengenannte Bedeutung hat,
und Di-Salzen (in der Regel Dinatrium-Salzen) von hydroxy-terminierten Polyethern der Formel (IIIa)

$$\text{Me-O-W-O-Me} \qquad \text{(IIIa),}$$

worin W die obengenannte Bedeutung hat und Me für Alkalimetall, Erdalkalimetall oder Zink, vorzugsweise für Natrium steht,
mit Dihalogen-diaryl-sulfonen der Formel (IVa)

$$Hal-Ar^1-SO_2-Ar^2-Hal \quad (IVa),$$

worin

| | |
|---|---|
| $Ar^1$ und $Ar^2$ | die obengenannte Bedeutung hat und |
| Hal | für Halogen, bevorzugt Fluor, Chlor oder Brom steht, |

in Gegenwart von polaren Lösungsmitteln.

Die erfindungsgemäßen Polysulfon/Polyether-Blockcopolykondensate lassen sich nach bekannten Methoden herstellen, z.B. entsprechend der Herstellung von aromatischen Polysulfonen (z.B. GB-PS 1 078 234, US-PS 4 010 147 und EP-A 135 938).

Als polare Lösungsmittel für das erfindungsgemäße Verfahren kommen am Stickstoff $C_1$-$C_5$-alkylsubstituiertes Caprolactam, wie N-Methyl-caprolactam, N-Ethylcaprolactam, N,n-Propylcaprolactam, N-Isopropylcaprolactam, und am Stickstoff $C_1$-$C_5$-alkylsubstituierte Pyrrolidone, wie N-Methylpyrrolidon; N,N-Dimethylformamid, N,N-Dimethylacetamid, Diphenylsulfon, Sulfolan oder Tetramethylharnstoff, bevorzugt Dimethylsulfoxid, in Frage.

Es können anteilig z.B. 0,1 bis 200 Gew.-%, bezogen auf das Gewicht des polaren Lösungsmittels, andere weniger polare Lösungsmittel mitverwendet werden, z.B. aromatische Kohlenwasserstoffe wie Toluol, Xylol, Mesitylen, Chlorbenzol, oder aliphatische Kohlenwasserstoffe wie Benzin, Cyclohexan. Die Menge an Lösungsmittel beträgt im allgemeinen 30 bis 90, bevorzugt 40 bis 60 Gewichtsteile, bezogen auf das Gesamtgewicht der einzusetzenden Verbindungen der Formeln (IIa), (IIIa) und (IVa).

Erfindungsgemäß können die Polysulfon/Polyether-Blockcopolykondensate im allgemeinen bei Temperaturen von 130°C bis 320°C, bevorzugt 145°C bis 280°C, und bei Drucken von 0,8 bis 10 bar, vorzugsweise 1 bis 3 bar, insbesondere bei atmosphärischem Umgebungsdruck hergestellt werden.

Das molare Mengenverhältnis der Summe der Alkalidiphenolate (IIa) und der Dialkalisalze der hydroxy-terminierten Polyether (IIIa) zu den Dihalogen-diaryl-sulfonen (IVa) liegt im allgemeinen zwischen 0,5 und 2, bevorzugt 0,8 und 1,2, besonders bevorzugt 0,95 und 1,05, wobei für hohe Molekulargewichte ein Verhältnis von 1 oder nahe bei 1 gewählt werden muß.

Die Konzentration der zur Alkalidiphenolatbildung eingesetzten konzentrierten Natronlauge muß einen Gewichtsanteil an festem Natriumhydroxid von 35 bis 45 %, vorzugsweise 40 bis 45 %, entsprechen. Das molare Verhältnis von Natriumhydroxid zu Diphenol bzw. Natriummethanolat zu Polyether liegt zwischen 2:1 bis 2,02:1, wobei für besonders hohe Molekulargewichte jeweils ein molares Verhältnis von 2:1 gewählt werden muß.

Die erfindungsgemäßen Polysulfon/Polyether-Blockcokondensate haben im allgemeinen Molekulargewichte ($\overline{M}_n$) von 5 000 bis 50 000, bevorzugt von 8 000 bis 40 000, bestimmt durch GPC in Tetrahydrofuran gegen Polystyrol als Molmassenstandard.

In einer ersten Reaktionsstufe werden, gegebenenfalls als separate Reaktion, aus den Hydroxylgruppen des Polyethers die Alkalimetall-Salze hergestellt. Als Lösungsmittel kommen die bereits obengenannten in Frage.

Geeignete Basen für die Herstellung der Salze der Polyether sind die Alkalimetallsalze niedermolekularer Alkohole wie Natriummethanolat, Kaliummethanolat, Natriummethanolat, Kalium-tert.butanolat, Alkali- und Erdalkalihydride, wie Natriumamid, Kaliumamid, Kalium-bis-(trimethylsilyl)-amid, Lithium-diisopropylamid, oder Metallalkyle, wie Butyllithium, Diethyl-Zink, sec.-Butyllithium, tert.-Butyllithium. Bevorzugt wird Natriummethanolat.

Die erfindungsgemäßen Polysulfon/Polyether-Blockcopolykondensate können wie folgt aus den erhaltenen Reaktionsgemischen gewonnen werden:

Man verdünnt das Reaktionsgemisch, insbesondere wenn sehr hoch viskose Lösungen vorliegen, z.B. mit dem polaren Reaktionslösemittel oder einem anderen Lösungsmittel für das Polysulfon/Polyether-Blockcopolykondensat und filtriert. Nach Neutralisation des Filtrats mit einer geeigneten Säure, z.B. Essigsäure oder Phosphorsäure, wird das Blockcopolykondensat durch Eingießen in ein geeignetes Fällungsmedium, z.B. Wasser, Alkohol (wie z.B. Methanol, Isopropanol) oder Wasser-Alkohol-Gemische, z.B. Wasser/Methanol 1:1, ausgefällt, isoliert und anschließend getrocknet.

Die Diphenole gemäß Rest E bzw. Formel (II) und (IIa) sind entweder literaturbekannt oder nach literaturbekannten Verfahren herstellbar (vgl. z.B. DE-OS 3 833 396).

Geeignete Diphenole entsprechend Struktureinheit der Formel (II) sind z.B.

Hydrochinon,
Resorcin,
Dihydroxydiphenyle,

Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole

sowie deren kernalkylierte und kernhalogenierte Verbindungen.

Diese und weitere geeignete andere Diphenole gemäß Formel (II) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte Diphenole sind beispielsweise

4,4'-Dihydroxydiphenyl,
1,1-Bis-(4-hydroxyphenyl)-3,3-5-trimethylcyclohexan,
2,2-Bis-(4-hydroxyphenyl)-propan
2,2-Bis-(4-hydroxyphenyl)-3-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,2-Bis-(3,5-dimethyl-4-hydroxyphenyl)-3-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4'-Dihydroxydiphenylsulfon.

Sie können einzeln oder im Gemisch eingesetzt werden.

Geeignete Dihalogendiarylsulfone der Formel (IVa) sind z.B.

4,4'-Dichlordiphenylsulfon,
4,4'-Difluordiphenylsulfon,
4-Chlor-4'-fluordiphenylsulfon,
3,3'-Dinitro-4,4'-dichlordiphenylsulfon,
3,3'-Dinitro-4,4'-difluordiphenylsulfon,
4,4'-Dibromdiphenylsulfon,

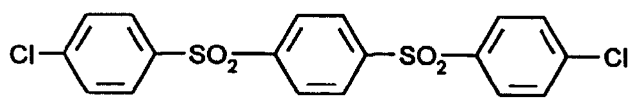

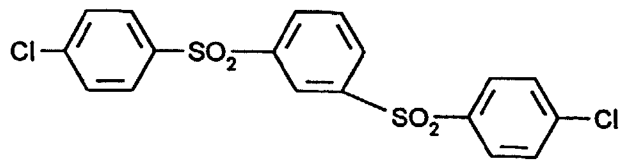

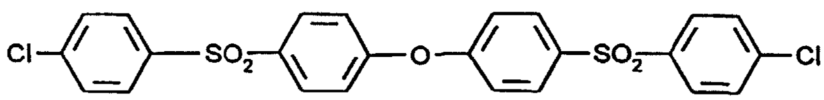

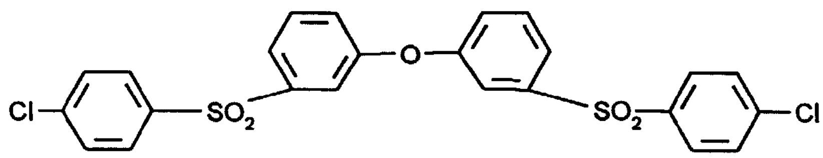

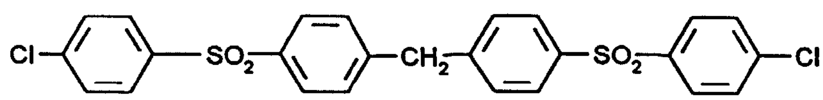

Zur Herstellung der erfindungsgemäßen Polysulfon/Polyether-Blockcopolykondensate können folgende Verbindungen als hydroxyfunktioneller Polyether (Rest W in Formel (I)) eingesetzt werden: Polymere bzw. Oligomere mit mindestens zwei gegenüber Basen reaktionsfähigen Wasserstoffatomen von einem Molekulargewicht ($\overline{M}_n$) in der Regel von 400 bis 30 000. Hierunter versteht man neben Thiol- oder Aminogruppen aufweisenden Verbindungen vorzugsweise Hydroxylgruppen aufweisende Verbindungen, insbesondere zwei bis acht Hydroxylgruppen aufweisende Verbindungen, bevorzugt solche mit einem Molekulargewicht ($\overline{M}_n$) von 500 bis 20 000, besonders bevorzugt 700 bis 8 000, bestimmt durch Endgruppenbestimmung, z.B. mindestens zwei, vorzugsweise 2 bis 8, besonders bevorzugt 2 bis 4, ganz besonders bevorzugt 2 bis 3, insbesondere zwei Hydroxylgruppen aufweisende Polyether, Polythioether und Polyacetale.

a) Die Polyether sind allgemein bekannt. Polyalkylenether kommen beispielsweise in Frage:
Die Polyether werden erhalten durch Polymerisation von cyclischen Ethern (Alkylenoxiden), z.B. Ethylenoxid, Propylenoxid, Butylenoxid, Tetrahydrofuran, Styroloxid oder Epichlorhydrin mit sich selbst oder durch Copolymerisation von mehreren cyclischen Ethern dieser Gruppe oder stufenweise Polymerisation mehrerer cyclischer Ether dieser Gruppe (wodurch Blockcopolyether entstehen), z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-1,3 oder -1,2, Trimethylolpropan, Glycerin, Sorbit, 4,4'-Dihydroxydiphenylpropan, Anilin, Ethanolamin oder Ethylendiamin hergestellt. Auch Sucrosepolyether, wie z.B. in den DE-Auslegeschriften 1 176 358 und 1 064 938 beschrieben werden, sowie auf Formit oder Formose gestartete Polyether (DE-Offenlegungsschriften 2 639 983 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

b) Unter den Polythioethern seien insbesondere die Kondensationsprodukte von Thioglykol mit sich selbst und/oder mit anderen Alkylenglykolen, Formaldehyd oder Aminoalkoholen angeführt. Je nach den Cokomponenten handelt es sich bei den Produkten z.B. um Polythiomischether.

c) Als Polyacetale kommen z.B. die aus Alkylenglykolen, wie Diethylenglykol, Triethylenglykol, 4,4'-Dihydroxydiphenylpropan, Hexandiol und Formaldehyd herstellbaren Verbindungen in Frage. Auch durch Polymerisation cyclischer Acetale wie z.B. Trioxan (DE-Auslegeschrift 1 694 128) lassen sich geeignete, erfindungsgemäß einsetzbare Polyacetale herstellen.

Den erfindungsgemäßen Polysulfon-Blockcopolykondensate können noch übliche Additive wie Weichmacher, Entformungsmittel, Stabilisatoren wie z.B. UV-Absorber oder Antioxidantien, Intumeszenzhilfsmittel (Flammschutzmittel), Verstärkungsfasern wie Glasfasern, Kohlenstoffasern oder Aramidfasern, Füllstoffe, anorganische und organische Pigmente, keramische Grundstoffe, Ruß etc. zugesetzt werden, bevorzugt in Mengen von 0 bis 80, bevorzugt 0 bis 60 Gew.-%, bezogen auf Polysulfon-Blockcopolykondensat = 100 %, zweckmäßig vor der Verarbeitung der erfindungsgemäßen Polysulfon-Blockcopolykondensate zu Formkörpern und Folien.

Beispiele

| **Verwendete Komponenten** | |
|---|---|
| PEG 8.000 | Polyethylenglykol (Breox 8.000: Produkt der Fa. Shell) |
| PTHF 4.500 | Polytetrahydrofuran (Terathane 4.500; Produkt der Fa. DuPont) |
| Bisphenol A | 2,2-Bis-(4-hydroxyphenyl)-propan; |
| TMC-Bisphenol | 1,1-Bis-(4-hydroxyphenyl)-3,3,5-trimethylcyclohexan |

| **Vergleichsbeispiel 1 (ohne Polyethylenglykolblock)** | | | |
|---|---|---|---|
| Komponente | | | |
| 1 | 124,16 g | 400 mMol | TMC-Bisphenol |
| 2 | 240,00 g | | Dimethylsulfoxid |
| 3 | 290,00 g | | Chlorbenzol |
| 4 | 70,77 g | 802 mMol | 45,33 %ige Natronlauge |
| 5 | 112,00 g | 390 mMol | 4,4'-Dichlordiphenylsulfon (50 %ig in getrocknetem Chlorbenzol) |
| 6 | 1,15 g | 4 mMol | 4,4'-Dichlordiphenylsulfon (50 %ig in getrocknetem Chlorbenzol) |
| 7 | 0,87 g | 3 mMol | 4,4'-Dichlordiphenylsulfon (50 %ig in getrocknetem Chlorbenzol) |
| 8 | 0,87 g | 3 mMol | 4,4'-Dichlordiphenylsulfon (50 %ig in getrocknetem Chlorbenzol) |

**Apparatur**

In einem 1 l-Planschlifftopf mit beheizbarem Mantel, Bodenablaßventil und Ankerrührer, Wasserabscheider für schwere Lösungsmittel mit aufgesetztem Rückflußkühler und Brüdenthermometer und nachgeschlateter 30 cm Molekularsiebsäule (4 Å), Innenthermometer, einem beheizbaren 250 ml Tropftrichter sowie einem 100 ml Tropftrichter werden die Komponenten 1-3 vorgelegt, wobei ein Stickstoffstrom von 10 l $N_2$/Stunde übergeleitet wird. Der Ölthermostat zur Beheizung des Reaktors wird auf 170°C Betriebstemperatur eingeregelt. Der Rührantrieb des Ankerrührers ist mit einem Drehmomentsensor zur Detektion der Viskosität (Rheosyst 1.000 der Firma Coesfeld) ausgerüstet. Zu Beginn wird eine Drehzahl von 300 U/min eingestellt.

**Bisphenolat-Herstellung:**

Ab 75°C Innentemperatur wird Komponente 4 über den 100 ml Tropftrichter in 10 Minuten zudosiert und

anschließend mit 20 ml Chlorbenzol nachgespült. Ab einer Innentemperatur von 115°C setzt Rückfluß ein, die Temperatur wird durch Wasser-Auskreisen innerhalb einer Stunde auf 140°C gesteigert. Nach Abtrennen des Wassers im Wasserabscheider wird die abdestillierte Chlorbenzolmenge über die Molekularsiebsäule in das Reaktionsgefäß zurückgeführt. Nachdem der Wassergehalt des abdestillierten Chlorbenzols nach Karl-Fischer-Titration kleiner als 0,25 % ist, wird in etwa 20 Minuten Chlorbenzol abdestilliert, bis die Innentemperatur auf 145°C angestiegen ist.

**Polykondensation:**

Aus dem mit 1,6 bar Wasserdampf beheizten Tropftrichter wird in etwa 20 Minuten die 80°C warme Lösung der Komponente 5 zudosiert und der Tropftrichter mit 20 ml warmem Chlorbenzol aus dem Abscheider nachgespült. Vorsichtig wird weiter Chlorbenzol abdestilliert - ca. 210 g (Öl-Thermostat auf 180°C), bis eine Innentemperatur von 155°C erreicht wird. Diese Temperatur wird eine Stunde gehalten, danach wird die 80°C warme Lösung der Komponente 6 aus dem beheizten Tropftrichter - nachgespült mit warmem Chlorbenzol aus dem Abscheider - zugegeben und etwa 60 Minuten bis zum Abflachen des Viskositätsanstiegs laut Drehmomentsensor des Rührwerks nachgerührt. Die Zudosierung der Lösungen 7 und 8 erfolgt in der gleichen Art und Weise. Nach Abflachen des Viskositätsanstiegs nach der dritten Zugabe wird die Reaktionslösung noch etwa eine Stunde bei 155°C gerührt.

**Aufarbeitung:**

Das Reaktionsgemisch wird bis auf 80°C abgekühlt, mit etwa der doppelten der abdestillierten Menge Chlorbenzol - 520 g - verdünnt und über den Bodenablaß des Reaktors in einen 5 Liter-Reaktor gepumpt. Die Reaktionsmischung wird mit zwei Liter Wasser versetzt und mit Essigsäure bis auf pH 2 angesäuert. Nach Abtrennen der wäßrigen Phase - zur besseren Phasenseparation wird Dichlormethan zugesetzt- wird die organische Phase solange mit Wasser gewaschen, bis die Leitfähigkeit des Waschwassers kleiner als 0,1 mikroSiemens ist.

Die Produktlösung wird in Ethanol gegeben und das Polymer ausgefällt. Nach 12 Stunden Trocknung im Vakuum bei 100°C wird das Polymer in Dichlormethan gelöst; aus der Lösung werden Gießfolien zur Polymercharakterisierung hergestellt; die Ergebnisse sind in der Tabelle 2 aufgeführt.

**Vergleichsbeispiel 2** (ohne Polyethylenglykolblock)

| | | | |
|---|---|---|---|
| 1 | 91,32 g | 400 mMol | Bisphenol A |
| 2 | 240,00 g | | Dimethylsulfoxid |
| 3 | 290,00 g | | Chlorbenzol |
| 4 | 71,70 g | 802 mMol | 44,74 %ige Natronlauge |
| 5 | 112,00 g | 390 mMol | 4,4'-Dichlordiphenylsulfon (50 %ig in getrocknetem Chlorbenzol) |
| 6 | 1,15 g | 4 mMol | 4,4'-Dichlordiphenylsulfon (50 %ig in getrocknetem Chlorbenzol) |
| 7 | 0,87 g | 3 mMol | 4,4'-Dichlordiphenylsulfon (50 %ig in getrocknetem Chlorbenzol) |
| 8 | 0,87 g | 3 mMol | 4,4'-Dichlordiphenylsulfon (50 %ig in getrocknetem Chlorbenzol) |

Dies nicht erfindungsgemäße Produkt wird nach dem Verfahren wie in Vergleichsbeispiel 1 hergestellt: TMC-Bisphenol wird gegen Bisphenol A ausgetauscht.

**Beispiel 1** (erfindungsgemäß)

| **Lösung A:** | | | |
|---|---|---|---|
| 1 | 53,77 g | 6,7 mmol | Polyethylenglykol 8.000 (Breox 8.000) |
| 2 | 100 g | | Dimethylsulfoxid |
| 3 | 2,43 g | 14 mmol | 30 %ige Natriummethylat-Lösung |

| Lösung B: | | | |
|---|---|---|---|
| 4 | 122,08 g | 393 mmol | TMC-Bisphenol |
| 5 | 240,00 g | | Dimethylsulfoxid |
| 6 | 290,00 g | | Chlorbenzol |
| 7 | 70,80 g | 802 mmol | 45,33 %ige Natronlauge |

| Polykondensation: | | | |
|---|---|---|---|
| 8 | 112,00 g | 390 mmol | 4,4'-Dichlordiphenylsulfon (50 %ig in getrocknetem Chlorbenzol) |
| 9 | 1,15 g | 4 mmol | 4,4'-Dichlordiphenylsulfon (50 %ig in getrocknetem Chlorbenzol) |
| 10 | 0,87 g | 3 mmol | 4,4'-Dichlordiphenylsulfon (50 %ig in getrocknetem Chlorbenzol) |
| 11 | 0,87 g | 3 mmol | 4,4'-Dichlordiphenylsulfon (50 %ig in getrocknetem Chlorbenzol) |

**Apparatur:**

In einem 1 l-Planschlifftopf mit beheizbarem Mantel, Bodenablaßventil und Ankerrührer, Wasserabscheider für schwere Lösungsmittel mit aufgesetztem Rückflußkühler und Brüdenthermometer und nachgeschalteter 30 cm Molekularsiebsäule (4 Å), Innenthermometer, einem beheizbaren 250 ml Tropftrichter sowie einem 100 ml Tropftrichter werden die Komponenten 4 bis 6 vorgelegt, wobei ein Stickstoffstrom von 10 1 $N_2$/Stunde übergeleitet wird. Der Ölthermostat zur Beheizung des Reaktors wird auf 170°C Betriebstemperatur eingeregelt. Der Rührantrieb des Ankerrührers war mit einem Drehmomentsensor zur Detektion der Viskosität (Rheosyst 1 000 der Firme Coesfeld) ausgerüstet. Zu Beginn wird eine Drehzahl von 300 U/min eingestellt.

**Lösung A (Dinatrium-Salz von Polyethylenglykol 8 000):**

In einer Destillationsapparatur werden die Komponente 1 bis 3 vorgelegt und bei Normaldruck wird bis zu einer Supftemperatur von ca. 85°C Methanol abdestilliert.

**Komponente B: Bisphenolat-Herstellung:**

Ab 75°C Innentemperatur wird Komponente 7 über den 100 ml Tropftrichter in 10 Minuten zudosiert und anschließend mit 20 ml Chlorbenzol nachgespült. Ab einer Innentemperatur von 115°C setzt Rückfluß ein, die Temperatur wird durch Wasser-Auskreisen innerhalb einer Stunde auf 140°C gesteigert. Nach Abtrennen des Wassers im Wasserabscheider wird die abdestillierte Chlorbenzolmenge über die Molekularsiebsäule in das Reaktionsgefäß zurückgeführt. Nachdem der Wassergehalt des abdestillierten Chlorbenzols nach Karl-Fischer-Titration kleiner als 0,25 % ist, wird in etwa 20 Minuten Chlorbenzol abdestilliert, bis die Innentemperatur auf 145°C angestiegen ist.

**Zugabe der Lösung A:**

Die Lösung des Dinatriumsalzes des Polyethylenglykols 8 000 in Dimethylsulfoxid wird bei 100°C zudosiert.

**Polykondensation:**

Aus dem mit 1,6 bar Wasserdampf beheizten Tropftrichter wird in etwa 20 Minuten die 80°C warme Lösung der Komponente 8 zudosiert und der Tropftrichter mit 20 ml warmem Chlorbenzol aus dem Abscheider nachgespült. Vorsichtig wird weiter Chlorbenzol abdestilliert - ca. 210 g (Öl-Thermostat auf 180°C), bis eine Innentemperatur von 155°C erreicht wird. Diese Temperatur wird eine Stunde gehalten, danach wird die 80°C warme Lösung der Komponente 9 aus dem beheizten Tropftrichter - nachgespült mit warmem Chlorbenzol aus dem Abscheider - zugegeben und etwa 60 Minuten bis zum Abflachen des Viskositätsanstiegs laut Drehmomentsensor des Rührwerks nachgerührt. Die Zudosierung der Lösungen 10 und 11 erfolgt in der gleichen Art und Weise. Nach Abflachen des Viskositätsanstiegs nach der dritten Zugabe wird die Reaktionslösung noch etwa eine Stunde bei 155°C gerührt.

**Aufarbeitung:**

Das Reaktionsgemisch wird bis auf 80°C abgekühlt, mit etwa der doppelten der abdestillierten Menge Chlorbenzol - 0,7 l - verdünnt und über den Bodenablaß des Reaktors in einen 5 Liter-Reaktor gepumpt. Die Reaktionsmischung wird mit zwei Liter Wasser versetzt und mit Essigsäure bis auf pH 2 angesäuert. Nach Abtrennen der wäßrigen Phase - zur besseren Phasenseparation werden 0,7 l Dichlormethan zugesetzt - wird die organische Phase solange mit Wasser gewaschen, bis die Leitfähigkeit des Waschwassers kleiner als 0,1 mikroSiemens ist. Die Produktlösung wird in Ethanol gegeben und das Polymer ausgefällt. Nach 12 Stunden Trocknung im Vakuum bei 100°C wird das Polymer in Dichlormethan gelöst. Aus dieser Lösung werden Gießfolien zur Polymercharakterisierung hergestellt; Daten siehe Tabelle.

**Beispiele 2 bis 5:**

Entsprechend der Vorschrift in Beispiel 1 werden mit den in der folgenden Tabelle aufgeführten Komponenten und den jeweils angegebenen Mengen die erfindungsgemäßen Polysulfon/Polyether-Blockcopolykondensate hergestellt.

**Tabelle 1**

**Zusammensetzung der Polysulfon/Polyether-Blockcokondensate**

| | Polyether-Anteil Gew.-% | Polyether | Menge | Bisphenol | Menge | Sulfon | Menge |
|---|---|---|---|---|---|---|---|
| Beispiel 2 | 34,4 | PEG 8.000 | 107,54 g (0,014 mol) | TMC-Bisphenol | 120,0 g (0,387 mol) | Dichlordi-phenylsulfon | 114,89 g (0,400 mol) |
| Beispiel 3 | 44,4 | PEG 8.000 | 161,31 g (0,020 mol) | TMC-Bisphenol | 117,92 g (0,380 mol) | Dichlordi-phenylsulfon | 114,89 g (0,400 mol) |
| Beispiel 4 | 60 | PEG 8.000 | 294,08 g (0,037 mol) | TMC-Bisphenol | 112,02 g (0,363 mol) | Dichlordi-phenylsulfon | 114,89 g (0,400 mol) |
| Beispiel 5 | 38,34 | PEG 8.000 | 107,54 g (0,014 mol) | Bisphenol-A | 88,26 g (0,387 mol) | Dichlordi-phenylsulfon | 114,89 g (0,400 mol) |

**Tabelle 2**

Ergebnisse

| Probe | Einbau von Polyether nach $^1$H-NMR 1) | | Relative Viskosität 2) | Zugfestigkeit 3) | Reißdehnung | $T_{on}$ (TMA) 4) | $T_{1/2}$ (TMA) 4) | $T_g$ 5) | Zersetzung nach TGA 6) | Polarer Anteil der Oberflächenspannung |
|---|---|---|---|---|---|---|---|---|---|---|
| | Ist/% | Soll/% | | MPa | % | °C | °C | °C | °C | mN/m |
| Vergl.-bsp. 1 | 0 | 0 | 1,244 | 24 | 4 | 216 | 268 | - | - | 1,03 |
| Bsp. 1 | 19,2 | 20 | 1,350 | 49,8 | 5 | 193 | 214 | 143,6 | 382 | 6,26 |
| Bsp. 2 | 31,8 | 34,4 | 1,290 | 38,0 | 311 | 131 | 153 | 71,7 | 396 | 7,73 |
| Bsp. 3 | 42,2 | 44,4 | 1,348 | 34,1 | 405 | 92 | 120 | -47,1 | - | 9,15 |
| Bsp. 4 | 56,8 | 60 | 1,314 | 27,8 | 3 | 50 | 55 | -31,1 | - | 11,42 |
| Vergl.-bsp. 2 | 0 | 0 | 1,174 | 53,7 | 8 | 160 | 183 | - | - | 4,83 |
| Bsp. 5 | 35,8 | 38,34 | 1,316 | 35,8 | 390 | 65,5 | 89,0 | - | - | 22,42 |

Tabelle 2 zeigt, daß die erfindungsgemäßen Beispiele deutlich geringere Schmelz- und Erweichungstemperaturen haben als die entsprechenden Vergleichsbeispiele und sich daher deutlich besser verarbeiten und technisch relativ einfach z.B. zu Katheterschläuchen extrudieren lassen.

Aus dem deutlich höheren polaren Anteil der Oberflächenspannung geht hervor, daß die erfindungsgemäßen Beispiele eine deutlich bessere Blutverträglichkeit haben als die Vergleichsbeispiele. Außerdem zeichnen sich die erfmdungsgemäßen Beispiele durch eine bessere Reißdehnung (insbesondere Beispiele 2 und 3) und Zugfestigkeit aus.

[1] Bestimmung des Anteils der Polyethersegmente

Entsprechend der folgenden Formel wurde der Einbau der Polyether-Segmente in die Polymere aus den Intensitäten der Signale bei δ = 6,8 bis 7,8 ppm und bei δ = 3,6 ppm berechnet. Durch das auch im Bereich von δ = 6,8 bis 7,8 ppm liegende Chloroform (Lösemittel)-Signal wird die Signal-Intensität der Aromaten-Protonen zu hoch, d. h. das gemessene Verhältnis wird zu groß und der so ermittelte eingebaute Polyether-Gehalt als zu niedrig bestimmt.

$$V = \frac{I_{\delta = 6,8 - 7,8\ ppm}}{I_{\delta = 3,6\ ppm}}$$

$$V = 2 \cdot \frac{M_{PE\text{-}Einheit}}{M^*_{Sulfon} + M^*_{Bisphenol}} \cdot \left[ \frac{1}{M^*_{PE}} \cdot \left( M^*_{Bisphenol} \quad M^*_{Sulfon} \right) + \frac{2}{PE} - 2 \right]$$

| | |
|---|---|
| $I_{\delta = 6,8 - 7,8\ ppm}$ | Signalintensität der Protonen der aromatischen Bisphenol- und Sulfon-Komponente (16 Protonen) |
| $I_{\delta = 3,6\ ppm}$ | Signalintensität der Protonen der Methylengruppen des Polyethylenglykol (4 Protonen) |
| PE | Polyether-Gehalt |
| $M^*_{PE}$ | um 2 Wasserstoffe reduzierte Molmasse der Polyether-Komponente |
| $M^*_{Bisphenol}$ | um 2 Wasserstoffe reduzierte Molmasse der Bisphenol-Komponente |
| $M^*_{Sulfon}$ | um 2 Chlor-Atome reduzierte Molmasse der Sulfon-Komponente |
| $M_{PE\text{-}Einheit}$ | Molmasse der Polyether-Wiederholungseinheit |

Polysulfon/Polyether-Blockcopolykondensat auf der Basis: TMC-Bisphenol, PEG 2.000, 4,4'-Dichlordiphenylsulfon, Polyether-Anteil 20 Gew.-%.

| | |
|---|---|
| PE = | 0,2 |
| $M^*_{PE}$ = | 1998 g/mol |
| $M^*_{Bisphenol}$ = | 308,2 g/mol |
| $M^*_{Sulfon}$ = | 216,3 g/mol |
| $M_{PE\text{-}Einheit}$ = | 44,0 g/mol |

Diese Angaben eingesetzt, ergibt sich folgende vereinfachte Formel für das Intensitätsverhältnis in Abhängigkeit vom Polyethergehalt:

$$V = 0,336 \cdot \frac{1}{PE} - 0,328$$

oder für Polysulfon/Polyether-Blockcopolykondensate auf der Basis: TMC-Bisphenol, PTHF 4.500, 4,4'-Dichlordiphenylsulfon, Polyether-Anteil 20 Gew.-%.

| | |
|---|---|
| PE = | 0,2 |
| $M^*_{PE}$ = | 5471 g/mol |
| $M^*_{Bisphenol}$ = | 308,2 g/mol |
| $M^*_{Sulfon}$ = | 216,3 g/mol |
| $M_{PE\text{-}Einheit}$ = | 72,1 g/mol |

Diese Angaben eingesetzt, ergibt sich folgende vereinfachte Formel für das Intensitätsverhältnis in Abhängigkeit vom Polyethergehalt:

$$V = 0{,}5957 \cdot \frac{1}{PE} - 0{,}5907$$

2) Relative Viskosität: 0,5 g/100 ml Lösung in Dichlormethan
3) Zugfestigkeit, bestimmt an Gießfolien aus 15 %iger Lösung in Dichlormethan
4) TMA: Thermomechanische Analyse:

$T_{on}$ : Tangentenschnittverfahren
$T_{1/2}$ : halbe Eindringtiefe

5) $T_g$: Glastemperatur des Weichsegmentes
6) TGA: Thermogravimetrische Analyse:

Bestimmung der Zersetzungstemperatur

**Thermostabilität (ohne Scherung)**

Zur Untersuchung der thermischen Stabilität der Schmelze wurden isotherme Thermoanalysen mit dem Meßgerät TG 50 der Firma Mettler bei 240°C in Luft und Stickstoff aufgenommen. Das Polysulfon/Polyether-Blockcopolykondensat aus Beispiel 4 hatte nach 30 Minuten Temperaturbelastung in Luftatmosphäre einen Gewichtsverlust von 0,7 % und in Stickstoff-Atmosphäre einen Gewichtsverlust von 1,2 %, wobei die gemessenen Kurven sich diesem Wert asymptomatisch näherten.
Dieses beweist die thermische Stabilität des Polysulfon/Polyether-Blockcokondensats auch unter atmosphärischen Verarbeitungsbedingungen.
Zeitabhängig, bei konstanter Schergeschwindigkeit gemessene Schmelzviskosität (mit Scherung)
Über den Meßzeitraum von 16 Minuten hatte die Schmelze bei D = 2,26 $s^{-1}$ und 150°C bzw. 180°C Massetemperatur eine konstante Schmelzviskosität von 1.130 Pas bzw. 120 Pas.

## Patentansprüche

**1.** Polysulfon/Polyether-Blockcopolykondensate mit der wiederkehrenden Struktureinheit der Formel (I)

$$-\!\left(O-E-O-Ar^1-SO_2-Ar^2\right)\!-W- \qquad (I)$$

worin

| | |
|---|---|
| E | ein zweibindiger Diphenolat-Rest bedeutet, |
| $Ar^1$ und $Ar^2$ | gleiche oder verschiedene difunktionelle aromatische Reste mit 6 bis 50 Kohlenstoffatomen ist und |

W für einen mindestens zwei Hydroxylgruppen aufweisenden Polyether, Polythioether oder Polyacetal mit einem mittleren Molekulargewicht ($M_n$) von 400 bis 30.000 steht,

wobei der Anteil des Restes W im Gesamt-Blockcopolykondensat 5 bis 99 Gew.-% beträgt.

**2.** Polysulfon/Polyether-Blockcopolykondensate gemäß Anspruch 1 worin

E für einen Rest der Formel (II) steht

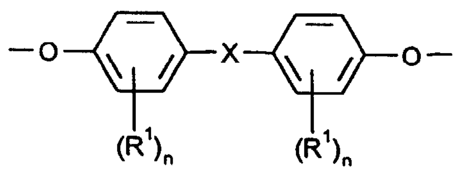

(II)

wobei

$R^1$ jeweils unabhängig voneinander, gleich oder verschieden für Wasserstoff, Halogen, $C_1$-$C_6$-Alkyl oder $C_1$-$C_6$-Alkoxy steht,

n für eine ganze Zahl 1 bis 4 steht,

X für eine chemische Bindung, -CO-, -O-, -S-, -$SO_2$-, für Alkylen, Alkyliden oder Cycloalkylen steht, wobei die 3 letztgenannten Reste durch Substituenten, ausgewählt aus Halogen und gegebenenfalls durch Halogen, $C_1$-$C_4$-Alkyl und/oder $C_1$-$C_4$-Alkoxy substituiertes Phenyl oder Naphthyl substituiert sein können und wobei Cycloalkylen zusätzlich durch $C_1$-$C_4$-Alkyl substituiert sein kann,

$Ar^1$ und $Ar^2$ für gleiche oder verschiedene difunktionelle Reste mit 6 bis 25 Kohlenstoffatomen stehen.

**3.** Polysulfon/Polyether-Blockcopolykondensate gemäß Anspruch 2, worin

X für einen Rest der Formel (III) steht,

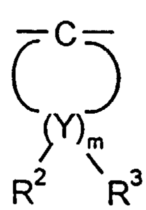

(III)

worin

Y für Kohlenstoff steht,

$R^2$ und $R^3$ für jedes Y individuell wählbar, unabhängig voneinander für Wasserstoff oder $C_1$-$C_6$-Alkyl stehen,

m für eine ganze Zahl von 3 bis 12 steht.

**4.** Verfahren zur Herstellung von Polysulfon/Polyether-Blockcopolykondensaten gemäß Anspruch 1 durch Umsetzung von Dialkaliphenolaten der Formel (IIa)

$$\text{Alkali-O-E-O-Alkali} \qquad \text{(IIa)}$$

worin E die in Anspruch 1 angegebene Bedeutung hat, und Di-Salzen von hydroxy-terminierten Polyethern der Formel (IIIa)

$$\text{Me-O-W-O-Me} \qquad \text{(IIIa),}$$

worin

Me für Alkalimetall, Erdalkalimetall oder Zink steht und

W die in Anspruch 1 angegebene Bedeutung hat,

mit Dihalogen-diaryl-sulfonen der Formel (IVa)

$$\text{Hal-Ar}^1\text{-SO}_2\text{-Ar}^2\text{-Hal} \qquad \text{(IVa),}$$

worin

$Ar^1$ und $Ar^2$ die in Anspruch 1 angegebene Bedeutung hat und

Hal für Halogen steht,

in Gegenwart von polaren Lösungsmitteln.

**5.** Verwendung von Polysulfon/Polyether-Blockcopolykondensaten gemäß Anspruch 1 zur Herstellung von Formkörpern.

**6.** Verwendung von Polysulfon/Polyether-Blockcopolykondensaten gemäß Ansprich 1 zur Herstellung von Membranen und Katheterschläuchen.

**7.** Formkörper, hergestellt aus Polysulfon/Polyether-Blockcopolykondensaten gemäß Anspruch 1.

**8.** Membranen und Katheterschläuche gemäß Anspruch 7.

## Claims

**1.** Polysulphone/polyether block copolycondensates having the recurring structural unit as in formula (I)

$$\text{-(-O-E-O-Ar}^1\text{-SO}_2\text{-Ar}^2\text{-)-W-} \qquad \text{(I)}$$

wherein

| | |
|---|---|
| E | signifies a divalent diphenolate radical, |
| $Ar^1$ and $Ar^2$ | are identical or different difunctional aromatic radicals having 6 to 50 carbon atoms and |
| W | represents a polyether, polythioether or polyacetal possessing at least two hydroxyl groups and having an average molecular weight ($\overline{M}_n$) of from 400 to 30,000, |

wherein the proportion of the radical W in the total block copolycondensate amounts to 5 to 99 wt.%.

**2.** Polysulphone/polyether block copolycondensates according to claim 1 wherein

E represents a radical of formula (II)

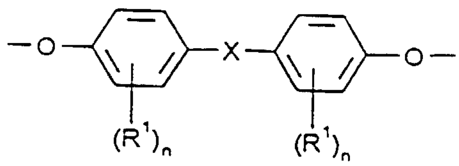

(II)

wherein

$R^1$ in each case independently of one another, identically or differently, represents hydrogen, halogen, $C_1$-$C_6$ alkyl or $C_1$-$C_6$ alkoxy,

n represents an integer from 1 to 4,

X stands for a chemical bond, -CO-, -O-, -S-, -$SO_2$-, for alkylene, alkylidene or cycloalkylene, with the three last-named radicals being substitutable by substituents selected from halogen and optionally by phenyl or naphthyl substituted by halogen, $C_1$-$C_4$ alkyl and/or $C_1$-$C_4$ alkoxy and with cycloalkylene being substitutable in addition by $C_1$-$C_4$ alkyl.

$Ar^1$ and $Ar^2$ represent identical or different difunctional radicals having 6 to 25 carbon atoms.

**3.** Polysulphone/polyether block copolycondensates according to claim 2, wherein

X represents a radical of formula (III),

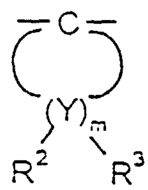

(III)

.

wherein

Y represents carbon,

$R^2$ and $R^3$ represent, individually selectable for each Y, independently of one another, hydrogen or $C_1$-$C_6$ alkyl,

m represents an integer from 3 to 12.

**4.** Method for the preparation of the polysulphone/polyether block copolycondensates according to claim 1 by the reaction of dialkyl diphenolates of formula (IIa)

alkali-O-E-O-alkali (IIa)

wherein E has the meaning given in claim 1,
and di-salts of hydroxy-terminated polyethers of formula (IIIa)

$$Me\text{-}O\text{-}W\text{-}O\text{-}Me \qquad (IIIa),$$

wherein

Me represents alkali metal, alkaline earth metal or zinc and

W has the meaning given in claim 1,

with dihalodiaryl sulphones of formula (IVa)

$$hal\text{-}Ar^1\text{-}SO_2\text{-}Ar^2\text{-}hal \qquad (IVa),$$

wherein

| | |
|---|---|
| $Ar^1$ and $Ar^2$ | have the meaning given in claim 1 and |
| hal | represents halogen, |

in the presence of polar solvents.

**5.** Use of the polysulphone/polyether block copolycondensates according to claim 1 for the production of moulded shapes.

**6.** Use of the polysulphone/polyether block copolycondensates according to claim 1 for the production of membranes and catheter tubes.

**7.** Moulded shapes, produced from polysulphone/polyether block copolycondensates according to claim 1.

**8.** Membranes and catheter tubes according to claim 7.

**Revendications**

**1.** Copolymères de condensation à blocs polysulfone/polyéther ayant l'unité constitutive de formule (I)

$$-\!\left(O-E-O-Ar^1-SO_2-Ar^2\right)\!-W- \qquad (I)$$

dans laquelle

| | |
|---|---|
| E | représente un reste diphénolate divalent, |
| $Ar^1$ et $Ar^2$ | représentent des restes aromatiques difonctionnels identiques ou différents de 6 à 50 atomes de carbone, et |
| W | représente un polyéther, polythioéther ou polyacétal contenant au moins 2 groupes hydroxyle et ayant une masse molaire moyenne ($\overline{M}_n$) de 400 à 30 000, la proportion du reste W dans le copolymère de condensation à blocs total étant de 5 à 99 % en masse. |

**2.** Copolymères de condensation à blocs polysulfone/polyéther selon la revendication 1, dans lesquels E est un reste de formule (II)

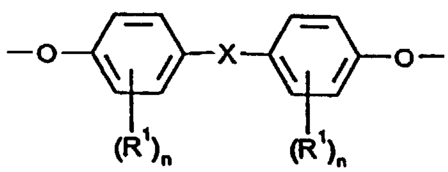

(II)

dans laquelle

les $R^1$ sont identiques ou différents et représentent, indépendamment les uns des autres, un atome d'hydrogène ou d'halogène ou un reste alkyle en $C_1$-$C_6$ ou alcoxy en $C_1$-$C_6$,

n est un nombre entier de 1 à 4,

X représente une liaison chimique, -CO-, -O-, -S-, $-SO_2-$, un reste alkylène, alkylidène ou cycloalkylène, ces trois derniers restes pouvant être substitués par des substituants choisis parmi des atomes d'halogène et des restes phényle ou naphtyle éventuellement substitués par halogène, alkyle en $C_1$-$C_4$ et/ou alcoxy en $C_1$-$C_4$, le reste cycloalkylène pouvant être substitué en outre par alkyle en $C_1$-$C_6$,

$Ar^1$ et $Ar^2$ représentent des restes difonctionnels identiques ou différents de 6 à 25 atomes de carbone.

**3.** Copolymères de condensation à blocs polysulfone/polyéther selon la revendication 2, dans lesquels X est un reste de formule (III)

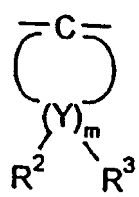

(III)

dans laquelle

Y représente un atome de carbone,

les $R^2$ et $R^3$ peuvent être choisis individuellement pour chaque Y et représentent indépendamment les uns des autres un atome d'hydrogène ou un reste alkyle en $C_1$-$C_6$,

m est un nombre entier de 3 à 12.

**4.** Procédé de préparation de copolymères de condensation à blocs polysulfone/polyéther selon la revendication 1 par réaction de phénolates dialcalins de formule (IIa)

(métal alcalin)-O-E-O-(métal alcalin) (IIa)

dans laquelle E a la signification indiquée dans la revendication 1,
et de di-sels de polyéthers à terminaison hydroxy de formule (IIIa)

Me-O-W-O-Me (IIIa)

dans laquelle Me représente un métal alcalin, un métal alcalino-terreux ou le zinc, et
W a la signification indiquée dans la revendication 1,
avec des dihalogénodiarylsulfones de formule (IVa)

$$Hal\text{-}Ar^1\text{-}SO_2\text{-}Ar^2\text{-}Hal \qquad (IVa)$$

dans laquelle

$Ar^1$ et $Ar^2$ ont la signification indiquée dans la revendication 1 et
Hal représente un halogène,

en présence de solvants polaires.

**5.** Utilisation de copolymères de condensation à blocs polysulfone/polyéther selon la revendication 1 pour la préparation d'articles moulés.

**6.** Utilisation de copolymères de condensation à blocs polysulfone/polyéther selon la revendication 1 pour la préparation de membranes et de tubes de cathéters.

**7.** Articles moulés préparés à partir de copolymères de condensation à blocs polysulfone/polyéther selon la revendication 1.

**8.** Membranes et tubes de cathéters selon la revendication 7.